Europäisches Patentamt

European Patent Office

Office européen des brevets

(11) Publication number : **0 496 609 A1**

# (12) EUROPEAN PATENT APPLICATION

(21) Application number : 92300565.6

(22) Date of filing : 23.01.92

(51) Int. Cl.⁵ : **G06K 7/08**

(30) Priority : 23.01.91 NL 9100109

(43) Date of publication of application :
29.07.92 Bulletin 92/31

(84) Designated Contracting States :
AT BE CH DE DK FR GB IT LI NL

(71) Applicant : Texas Instruments Holland B.V.
Kolthofsingel 8 Postbox 43
NL-7600 AA Almelo (NL)

(72) Inventor : D'Hont, Loek
Vlist 11
NL-8032 BE Zwolle (NL)
Inventor : Schuerman, Josef
An der Muhle 6
W-8051 Oberhummel (DE)

(74) Representative : Holt, Michael
TEXAS INSTRUMENTS LIMITED, Manton Lane
Bedford MK41 7PA (GB)

(54) Interrogating station for objects to be identified.

(57) Where a signal is to be sent to a transponder passing by an interrogation station, the station should include two window antennas mutually rectangular to each other driven by two carrier signals at the same frequency mutually 90° phase shifted such that a rotating field comes about in the interrogation passage associated with the station.

fig-2

EP 0 496 609 A1

The invention relates to an interrogating station for identification - using high-frequency signals - of an object which is moved along an interrogation path, said station being provided with a passive transponder fixed to the object for transmitting its own identification code in response to an interrogation signal, and an antenna system which is provided with at least one interrogating antenna for transmitting a high-frequency interrogation signal and a receiving antenna for receiving the identification code. Such an interrogating station is known in practice.

With such a station objects on which or in which a transponder is fixed are identified using the identification code belonging to the transponder. For this, a high-frequency carrier signal is transmitted in the interrogation path and received by the transponder. The transponder is a so-called passive transponder which is excited or charged by the above-mentioned carrier signal. In reaction to this, the transponder transmits the above-mentioned identification code, which is unique for each transponder. The design is generally such that during a particular interrogation period one or more transponders are excited, following which the identification code is transmitted in the succeeding receiving period by the transponders.

Such an interrogating station can be disposed e.g. near a conveyor along which objects such as pieces of luggage are being moved. The antenna used for the interrogation can be a rod antenna, but can also be a frame antenna such as a rectangular antenna disposed round the interrogation path on the conveyor. It goes without saying that the transponders can be situated in any desired orientation in the object and that the positioning of the object on the conveyor can also be selected as desired. The accuracy and the efficiency of the interrogation of such an interrogating station, of course, greatly depend on the radiation patterns of the interrogation and of the transmission by the transponder respectively. The shape of these radiation patterns depends on a number of factors, such as orientation and distance of the transponder relative to the interrogating antenna, the speed of the moving transponder, the number of transponders and the distance between them in the interrogation path, and the dimensions of the fixed interrogating antenna and transponder antenna etc. Each radiation pattern is three-dimensional, but it goes without saying that as a result of the above-mentioned range of factors dead angles and zones for which little or no interrogation takes place will occur in practice. This problem takes place in particular when several objects are moved virtually simultaneously through the interrogation path.

The object of the invention is to solve this problem and to indicate an interrogating station by which the demand for an almost complete cover of the interrogation path is met.

This is achieved in the case of an interrogating station of the type mentioned in the preamble according to one aspect of the invention in that the interrogating antenna comprises two identical frame antennae which are disposed round the interrogation path and which are arranged spatially at right angles to each other and are controlled by two carrier signals in quadrature at the same frequency, so that a rotary field is produced in the interrogation path.

This is achieved in an interrogating station of the type mentioned in the preamble according to another aspect of the invention in that the interrogating antenna comprises a first and a second identical frame antenna which are fitted round the interrogation path and lie in two vertical planes at right angles to each other, and a third identical frame antenna which lies in a horizontal plane halfway up the vertical height of the above-mentioned first and second frame antennae, while the first, second and third frame antennae are controlled by first, second and third carrier signals at the same frequency which are successively in quadrature. In these embodiments according to the invention an exceptionally accurate interrogation is achieved for each transponder orientation. The dead angles and zones have essentially disappeared. This is achieved through the fact that the object with transponder fixed thereto moving along the interrogation path is subjected to a rotary field during the interrogation period, so that the transponder, irrespective of its orientation and distance from the interrogating antenna, is certain to be covered by the rotary field at a certain moment. The certainty of activation of such a transponder is considerable and is greatly improved. It has appeared from experiments with the antenna according to the invention with two frame antennae that the number of non-activated or missed transponders obtained in the interrogating or charge antenna according to the state of the art goes down from 220 dpm to a number of 0.7 dpm.

The invention will be explained in greater detail on the basis of an example of an embodiment with reference to the appropriate drawings, in which:

Fig. 1 shows a schematic elevational view of the radiation pattern of a known frame antenna disposed round a conveyor;

Fig. 2 shows a perspective view of a rotary antenna according to the invention disposed round a conveyor;

Fig. 3 shows a graph of the two control signals of the rotary antenna of Fig. 2 in quadrature relative to each other; and

Fig. 4 shows a block diagram of the control circuit of the rotary antenna of Fig. 2.

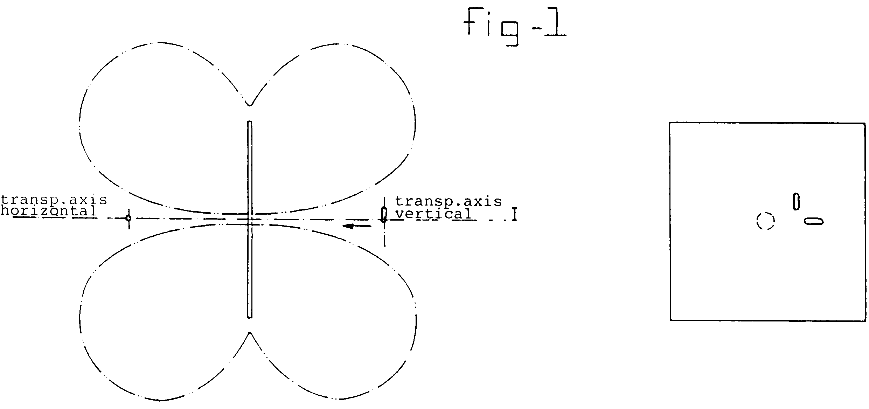

Fig. 1 shows an elevational view of a radiation pattern of a known frame antenna disposed round the conveyor. It is clear that when an object with a transponder fixed to it, running either horizontally or vertically, parallel to the plane of the antenna is moving along the axis I no reading takes place. This is due to the fact that the transponder virtually does not enter the radiation pattern. If the transponder were to move along another e.g. slanting axis, while the parallel orientation was maintained, it would enter and leave the radiation pattern twice. Orientations of antenna arrangement in which the said dead regions are reduced to a minimum are therefore possible. A problem arises, however, in the case of several transponders following each other in close succession. In this case in fact, although the excitation or charging of the transponders takes place with sufficient certainty, the accuracy of reading is considerably reduced as a result of the stationary radiation patterns. This problem is eliminated by the invention.

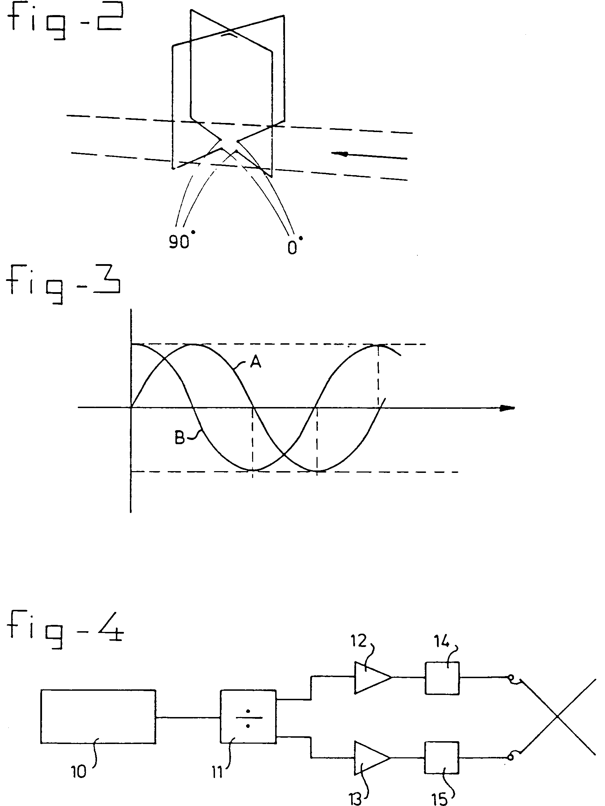

In the embodiment shown in Fig. 2, two frame antennae disposed at right angles to each other are disposed round the interrogation path. The conveyor, which in practice can have dimensions of 38 x 39 inches, runs from right to left. The two frame antennae are fed in the centre in the frame side lying below the conveyor and are also arranged in such a way that no mutual coupling occurs. The control currents fed to the feed points are in quadrature.

This mutual phase shifting is shown in Fig. 3. This control of the two antennae in quadrature and the spatial arrangement produce an electromagnetic rotary field through which each transponder during its movement through the interrogation path is virtually certain to be covered and interrogated by the field.

The block diagram of the control circuit of the rotary field antenna from Fig.2 is shown in Fig.4. A common oscillator 10 of e.g. 2147.2 kHz supplies a signal to a 1 : 16 frequency divider 11. This frequency divider has a dual output, from which the signals are fed each via a power amplifier 12, 13. A phase shifter 14, 15 is accommodated in the output circuit of each power amplifier, in such a way that in the end the currents fed to the two frame antennae are in quadrature. The rotating electromagnetic field is produced by this design has a complete rotation dig each 1/f second, where f = 134.2 kHz.

In the case of the above mentioned rotary field antenna it is generally a matter of two resonant LC circuits which are resonant at the same frequency in order to achieve a higher energy efficiency. In these circuits the currents are in quadrature (i.e. 90° phase shifted) relative to each other. It is, of course, also possible to use non-resonant coils for generation of the above-mentioned rotary field, so long as the quadrature requirement is met.

In a further variant according to the invention a third frame antenna is now diposed parallel to the plane of the conveyor, in order to obtain a three-dimensional electromagnetic rotary field. This third frame antenna is controlled with a carrier signal which is in quadrature (i.e. 90° phase shifted) to the carrier signal of the second frame antenna and in antiphase (i.e. 180° phase shifted) to the carrier signal of the first frame antenna. This produces a theorectically absolute certainty of activation of each transponder, irrespective of its orientation. This third frame antenna must preferably lie at half the height of the other two frame antennae, i.e. at the height of the axis I shown in Fig. 1. A disadvantage here can be the restriction of the throughfeed height of the objects being moved along.

According to the present invention in a further aspect thereof there is provided a method of identification using high-frequency signals of an object which is moved along an interrogation path, said object being provided with a passive transponder fixed to the object for transmitting its own identification code in response to an interrogation signal characterised by providing a frame antenna disposed around the interrogation path and driving the antenna with a carrier signal such that a rotary magnetic field is produced in the interrogation path.

## Claims

1. An interrogating station for identification - using high-frequency signals - of an object which is moved along an interrogation path, said object being provided with a passive transponder fixed to the object for transmitting its own identification code in response to an interrogation signal, and an antenna system which is provided with at least one interrogating antenna for transmitting a high-frequency interrogation code, characterised in that the interrogating antenna comprises a frame antenna disposed round the interrogation path such that a rotary magnetic field is produced in the interrogation path.

2. An integration station as claimed in claim 1 and characterised in that the frame antenna comprises two identical frame antennae which are arranged spatially at right angles to each other and are driven by two carrier signals in quadrature.

3. An interrogating station according to Claim 2, characterised in that the currents of the two carrier signals are in quadrature.

4. An interrogating station according to any preceding claim, in which the objects are moved along a conveyor containing the interrogation path, characterised in that a frame antenna is disposed such that its frame plane stands at an angle of approximately 45 degrees relative to the lengthwise direction of the conveyor.

5. Interrogating station according to any preceding claim, characterised in that a frame antenna is diposed relative to the conveyor such that the side of the frame antenna running below the conveyor is fed in the centre.

6. Interrogating station according to any of claims 2 to 5, in which the carrier signals are derived from a common high-frequency oscillator, characterised in that the high-frequency oscillator is followed by a power divider of which the two outputs each deliver a carrier signal of the same power, and in which a phase shifter is provided in one output, which phase shifter causes a quadrature in the one carrier signal relative to the other carrier signal.

7. Interrogating station according to claim 6, characterised in that a power amplifier is provided in series with each output of the power divider.

8. Interrogating station for identification - using high-frequency signals - of an object which is moved along an interrogation path, said station being provided with a passive transponder fixed to the object for transmitting its own identification code in response to an interrogating signal, and an antenna system which is provided with at least one interrogating antenna for transmitting a high-frequency interrogation signal and a receiving antenna for receiving the identification code, characterised in that the interrogating antenna comprises a first and a second identical frame antenna, which antennae are disposed round the interrogation path and lie in two vertical planes at right angles to each other, and a third identical frame antenna which lies in a horizontal plane at half the vertical height of the said first and second frame antennae, while the first, second and and frame antennae are controlled by first, second and third carrier signals at the same freqency which are successively in quadrature.

9. Interrogating station according to any of the preceding claims, characterised in that the freqency of the carrier signal is 134.2 kHz.

10. An interrogation station as claimed in any preceding claim and characterised in that the frame antenna comprises two identical frame antenna which cross at right angles to each other and are driven by two carrier signals in quadrature.

11. An interrogation station as claimed in claim 10 and characterised in that the frame antenna is perpendicular to the interrogation path.

12. An identification system including an interrogating station as claimed in any preceding claim.

13. A method of identification using high-frequency signals of an object which is moved along an interrogation path, said object being provided with a passive transponder fixed to the object for transmitting its own identification code in response to an interrogation signal characterised by providing a frame antenna disposed around the interrogation path and driving the antenna with a carrier signal such that a rotary magnetic field is produced in the interrogation path.

Fig-1

fig-2

90°     0°

fig-3

A

B

fig-4

12    14

÷

10     11     13    15

European Patent
Office

# EUROPEAN SEARCH REPORT

Application Number

EP    92 30 0565

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | IEEE TRANSACTIONS ON INDUSTRIAL ELECTRONICS vol. 35, no. 2, May 1988, NEW YORK, US pages 208 - 216; HIRANO ET AL.: 'Keyless entry system with radio card transponder' --- | 1,2,3,8, 13 | G06K7/08 |
| Y | US-A-3 689 885 (KAPLAN ET AL.) <br> * column 14, line 55 - column 18, line 21 * <br> * abstract * <br> * figure 6 * <br> --- | 1,2,3,8, 13 | |
| A | EP-A-0 285 419 (SATELLITE VIDEO SYSTEMS LTD) <br> * column 3, line 33 * <br> --- | 1,9,13 | |
| A | WO-A-8 602 186 (SAAB AUTOMATION AB) <br> * page 4 - page 5 * <br> * abstract; figure 2 * <br> ----- | 1,13 | |
| | | | TECHNICAL FIELDS SEARCHED (Int. Cl.5 ) <br><br> G06K |

The present search report has been drawn up for all claims

| Place of search | Date of completion of the search | Examiner |
|---|---|---|
| THE HAGUE | 13 APRIL 1992 | GOOSSENS A.M.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................
& : member of the same patent family, corresponding
    document

EPO FORM 1503 03.82 (P0401)